# EUROPÄISCHE PATENTSCHRIFT

(11) **EP 2 788 968 B1**
(45) Veröffentlichungstag und Bekanntmachung des Hinweises auf die Patenterteilung: **19.08.2015**
(21) Anmeldenummer: 12798642.0
(22) Anmeldetag: 16.11.2012
(51) Int. Cl.: G08G 1/16, G06K 9/00

(54) **VERFAHREN UND FAHRZEUGASSISTENZSYSTEM ZUR AKTIVEN WARNUNG UND/ODER ZUR NAVIGATIONSHILFE ZUR VERMEIDUNG EINER KOLLISION EINES FAHRZEUGKAROSSERIETEILS UND/ODER EINES FAHRZEUGRADES MIT EINEM OBJEKT**
METHOD AND VEHICLE ASSISTANCE SYSTEM FOR ACTIVE WARNING AND/OR FOR NAVIGATION AID FOR PREVENTING A COLLISION OF A VEHICLE BODY PART AND/OR A VEHICLE WHEEL WITH AN OBJECT
PROCÉDÉ ET SYSTÈME D'AIDE À LA CONDUITE DESTINÉ À ÉMETTRE UNE ALERTE ACTIVE ET/OU À ASSISTER LE GUIDAGE DU VÉHICULE POUR ÉVITER LA COLLISION D'UNE PARTIE DE CARROSSERIE ET/OU D'UNE ROUE DE VÉHICULE AVEC UN OBJET

(30) Priorität: 07.12.2011 DE 102011087894
(43) Veröffentlichungstag der Anmeldung: 15.10.2014
(73) Patentinhaber: Robert Bosch GmbH, 70442 Stuttgart (DE)
(72) Erfinder: NIEMZ, Volker, 71277 Rutesheim (DE)
(86) Internationale Anmeldenummer: PCT/EP2012/072873
(87) Internationale Veröffentlichungsnummer: WO 2013/083384

(56) Entgegenhaltungen:
- DE-A1-102005 003 191
- DE-A1-102007 022 524
- DE-A1-102009 032 542
- US-A1- 2010 100 268
- US-B1- 6 172 601

## Beschreibung

### Stand der Technik

Die vorliegende Erfindung betrifft ein Verfahren zur aktiven Warnung und/oder zur Navigationshilfe zur Vermeidung einer Kollision eines Fahrzeugkarosserieteils und/oder eines Fahrzeugrades mit mindestens einem Bordstein und/oder einem anderem ähnlichen Objekt und ein Fahrzeugassistenzsystem zur Durchführung des erfindungsgemäßen Verfahrens. Auch betrifft die Erfindung ein Fahrzeug mit einem erfindungsgemäßen Fahrzeugassistenzsystem.

Am Markt existieren eine Reihe reiner Rückfahrkamerasysteme. Diese haben die Aufgabe dem Fahrer ein reales Abbild des rückwärtigen Geschehens zu geben.

DE 10 2009 032 542 A1 zeigt ein Verfahren zum Betreiben einer Fahrerassistenz eines Fahrzeugs, welche mit Hilfe von Sensoren eine Lage eines Objekts in der Umgebung eines Fahrzeugs erfasst und der Abstand zwischen dem Objekt und dem Fahrzeug daraus berechnet. Dabei wird vorgeschlagen, je nach Zustand die äußere Kontur des Fahrzeugs ändernde Anbauteile oder Komponenten des Fahrzeugs zu überwachen und ein Modell zur Kollisionsberechnung in Abhängigkeit des erfassten Zustandes anzupassen.

DE 10 2005 003 191 A1 und DE 10 2007 022 524 A1 zeigen Vorrichtungen bzw. Verfahren zur Umfelderfassung eines bewegbaren Objektes, bei welchem in der Umgebung eines Fahrzeugs erzeugte Lichtlinien oder -muster mit Hilfe optischer Sensorik erkannt und zur Objekterkennung herangezogen werden. Zur Erzeugung der Lichtlinien bzw. -muster weisen die jeweiligen Systeme entsprechende Quellen elektromagnetischer Strahlung auf, welche vordefinierte Formen in dem Erfassungsbereich der optischen Erfassungseinheiten projizieren.

Neben diesen Systemen drängen immer stärker Multikamerasysteme in den Markt. Diese ermöglichen die Darstellung des Fahrzeugumfeldes aus einer Vogelperspektive (Top-View).

In Zukunft wird es nicht mehr ausreichen, nur die unmittelbare Fahrzeugumgebung darzustellen, sondern der Markt verlangt nach Systemen, welche den Fahrer beim Benutzen des Fahrzeuges in diversen Situationen unterstützen.

Mittels von seitlich am Fahrzeug insbesondere am Radkastenrand oder im Spiegelgehäuse montierten Kameras kann der Bereich seitlich um das Fahrzeug hinreichend erfasst werden.

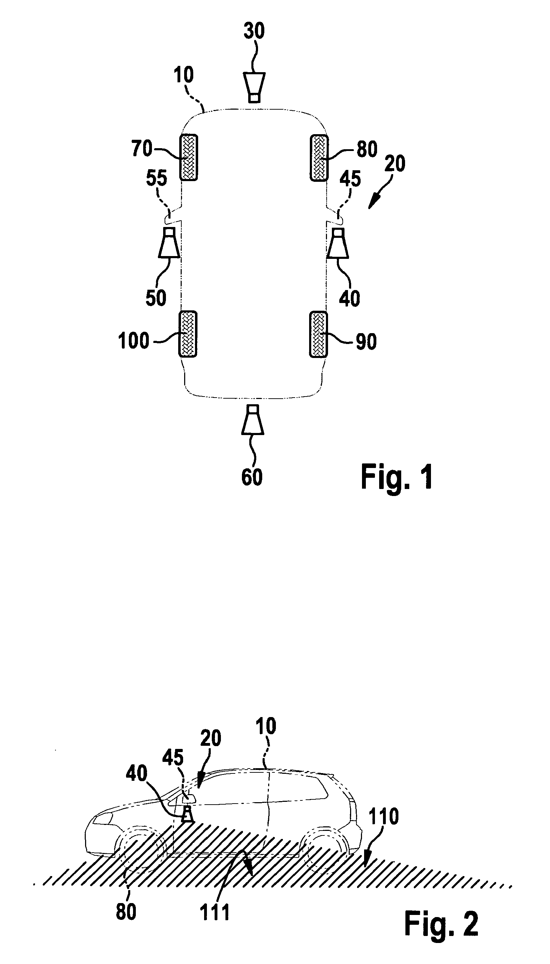

In der Figur 1 ist eine Draufsicht eines Fahrzeuges (Auto) 10 mit einem Mehrkamerasystem 20 mit einer typischen, aus dem Stand der Technik bekannten Konfiguration dargestellt.

Mittels von seitlich am Fahrzeug 10 insbesondere am Radkastenrand oder im Spiegelgehäuse 45, 55 montierten Kameras 40, 50 kann der Bereich seitlich um das Fahrzeug 10 hinreichend erfasst werden. An dem Fahrzeug können weitere Kameras wie zum Beispiel eine Frontkamera 30 und eine Heckkamera 60 vorhanden sein. In der Figur 1 sind auch die Räder 70, 80, 90, 100 des Fahrzeuges 10 dargestellt.

In der Figur 2 ist eine Teil-Seitenansicht des Fahrzeuges aus der Figur 1 mit dem entsprechenden Multikamerasystem 20 dargestellt. Während der Fahrt auf einer Straße 110 wird stets der unmittelbare Bereich 111 seitlich um das Fahrzeug 10 (ca. 1 m) auf das Vorhandensein eines Bordsteins untersucht. Dies gelingt beispielsweise auf eine einfache Art und Weise mittels der Auswertung der detektierten Gradienten (Gradientenerkennung z.B. mittels des Sobel-Operators). Diese werden dann mittels entsprechend definierter Klassifikatoren verglichen.

Die Lage des erkannten Bordsteins kann nun mit der aktuellen Fahrzeugbewegung verglichen werden. Sollte das hintere Rad (im Fall der Vorwärtsfahrt) oder das vordere Rad (im Fall der Rückwärtsfahrt) mit einem Bordstein kollidieren, so soll der Fahrer rechtzeitig gewarnt werden.

Weiterhin denkbar ist das Ausüben eines Lenkrucks in die Fahrsollrichtung, um eine entsprechende Kollision zu vermeiden.

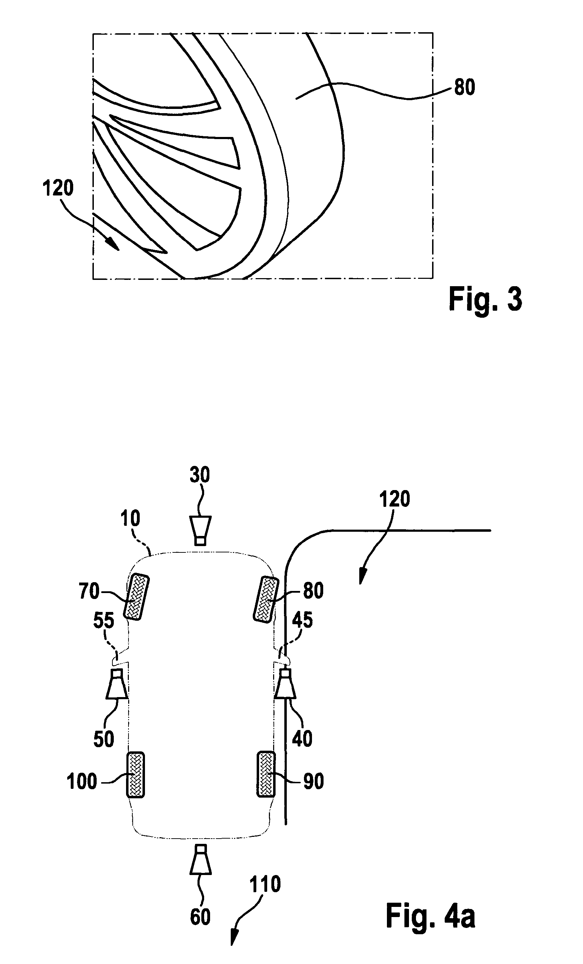

Figur 3 zeigt ein typisches Ergebnis einer Bordsteinkollision. Darin sind das verformte Fahrzeugrad 80 und der Bordstein 120 zu erkennen.

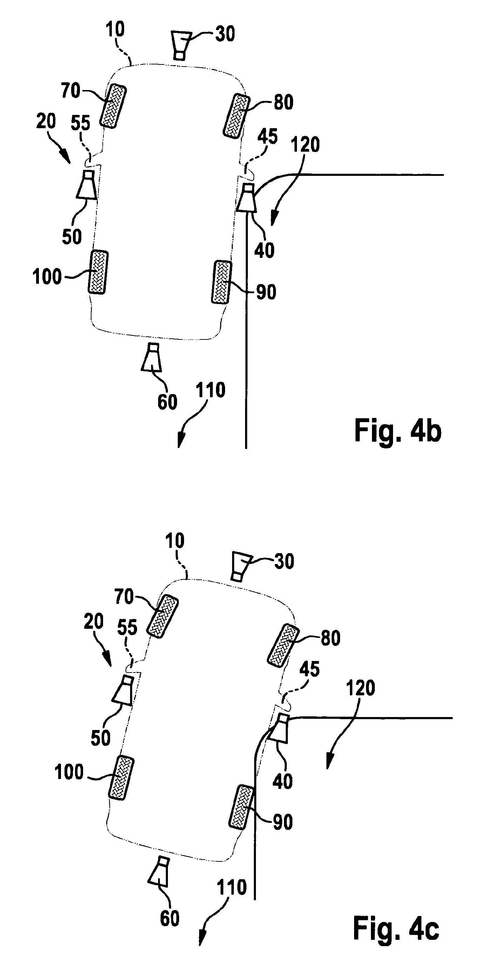

Bei Vorliegen von scharfen beziehungsweise engen Kurven treten insbesondere Bordsteinkollisionen sehr häufig auf. In den Figuren 4a, 4b und 4c ist das Fahrzeug 10 aus der Figur 1 beim Befahren einer engen Kurve, die am Ende einer Straße 110 auftritt, in drei verschiedenen Positionen dargestellt. Der Fahrer befährt die Kurve mit einem zu engen Radius. Das Vorderrad 80 passiert die Kurve, das Hinterrad 90 kollidiert mit dem Bordstein 120. Das Hinterrad (Reifen, Felge) 90 könnte erhebliche Schädigungen davon tragen und der Fahrkomfort könnte dabei auch erheblich beeinträchtigt werden.

Aus dem Stand der Technik, insbesondere aus den Dokumenten DE 10 2005 037 273 A1 und DE 10 2005 015 463 B4, sind Navigationsassistenten zur Vermeidung von Bordsteinkollisionen bekannt, die kamerabasiert arbeiten und Bordsteine anhand einer Objekterkennung identifizieren. Hier ist jedoch lediglich allgemein eine Mustererkennung angegeben, bei der detektierte Objekte mit vorbekannten eingespeicherten Mustern verglichen werden. Nachteilig dabei ist, dass die aus dem Stand der Technik bekannten Navigationsassistenten genügend Speicherplatz für die Einspeicherung der Vielzahl von vorbekannten Mustern haben müssen und/oder über eine hohe Rechenleistung verfügen müssen, damit insbesondere die Vergleichszeit mit den vielen vorhandenen Mustern kurz genug ist, um in einer Gefahrsituation geeignet schnell reagieren zu können.

### Offenbarung der Erfindung

Bei dem erfindungsgemäßen Verfahren zur aktiven Warnung und/oder zur Navigationshilfe zur Vermeidung einer Kollision eines Fahrzeugkarosserieteils und/oder eines Fahrzeugrades mit mindestens einem Bordstein und/oder einem anderem ähnlichen Objekt, wird das mindestens eine Objekt anhand einer Auswertung der mittels mindestens einer am Fahrzeug befindlichen Kamera aufgenommenen Bilder der Fahrzeugumgebung erkannt. Ferner wird beim Vorliegen einer möglichen Kollision zwischen einem Fahrzeugkarosserieteil und/oder einem Fahrzeugrad und dem mindestens einen erkannten Objekt eine aktive Warnung ausgegeben und/oder aktiv in die Fahrzeugdynamik insbesondere in die Lenkung eingegriffen. Bei dem erfindungsgemäßen Verfahren wird das Muster der aktuell umgebenden Straße mittels einer Auswertung mindestens eines mittels mindestens einer am Fahrzeug befindlichen Kamera aufgenommenen Bildes der Fahrzeugumgebung bestimmt und mindestens ein mittels mindestens einer seitlich am Fahrzeug befindlichen Kamera aufgenommenen Bild der Fahrzeugumgebung auf Unterschiede zu der bestimmten Muster der aktuell umgebenden Straße zur Erkennung des mindestens einen Objekts ausgewertet. Erfindungsgemäß wird bei dem Verfahren mittels einer am Fahrzeug befindlichen Front- und/oder Heckkamera mindestens ein Bild eines Straßenstückes zur Bestimmung der Muster der aktuell umgebenden Straße aufgenommen und mit mindestens einem mittels der mindestens einen seitlichen Kamera aufgenommenen Bild der Fahrzeugumgebung zur Erkennung des mindestens einen Objekts korreliert. Bei dem erfindungsgemäßen Verfahren wird untersucht, ob die Pixel nahe dem Rad dem Bild der Straße oder einem Hindernis entsprechen. Durch die Front- und/oder Heckkamera (Rückfahrkamera) kann zunächst geprüft werden, ob sich ein Hindernis im unmittelbaren Umfeld befindet. Das kann mittels eines Parkpiloten oder per Videosensorik geschehen. Wurde kein Objekt erkannt, kann der Bildbereich direkt hinter bzw. vor dem Stoßfänger in eine Speichereinheit als repräsentatives Muster für die umgebende Straße gespeichert werden. Das gespeicherte Bild des Straßenstückes kann nun mit dem Bild der seitlichen Kamera korreliert werden. Dabei ist eventuell das Durchführen eines Histogrammabgleichs aufgrund unterschiedlicher Belichtungssituationen notwendig. Durch diesen Schritt ist das Muster der aktuell umgebenden Straße bekannt und der Bildbereich in der Nähe des Rades kann auf einen signifikanten Unterschied zu dem jeweiligen Straßenmuster ausgewertet werden. Unterschiede zu dem jeweiligen Straßenmuster werden genau dann festgestellt, wenn keine Straße im Bild abgebildet ist, sondern ein Bordstein oder ein anderes Hindernis.

Erfindungsgemäß wird weiterhin ein Fahrzeugassistenzsystem zur Durchführung des erfindungsgemäßen Verfahrens bereitgestellt, das eine Auswerteeinheit umfasst, die dazu ausgebildet ist, mindestens ein Bordstein und/oder ein anderes ähnliches Objekt anhand einer eine Mustererkennung der aktuell umgebenden Straße umfassenden Auswertung mindestens eines mittels mindestens einer, insbesondere seitlich am Fahrzeug befindlichen, Kamera aufgenommenen Bild der Fahrzeugumgebung zu bestimmen und beim Vorliegen einer möglichen Kollision zwischen einem Fahrzeugkarosserieteil und/oder einem Fahrzeugrad mit dem mindestens einen bestimmten Objekt ein Warn- und/oder Steuersignal zu erzeugen. Ferner umfasst das erfindungsgemäße Fahrzeugassistenzsystem eine Warneinheit, die dazu ausgebildet ist, beim Vorliegen eines von der Auswerteeinheit erzeugten Warnsignals eine aktive Warnung auszugeben, und/oder eine Steuereinheit, die dazu ausgebildet ist, beim Vorliegen eines von der Auswerteeinheit erzeugten Steuersignals in die Fahrzeugdynamik, insbesondere in die Lenkung, aktiv einzugreifen.

Die Unteransprüche zeigen bevorzugte Weiterbildungen der Erfindung.

Erfindungsgemäß wird eine aktive Warnung und/oder eine Navigierassistenz zum Vermeiden eines Rad- bzw. Reifenkontakts mit einem Bordstein und/oder ähnlichen Objekten in einfacher Weise bereitgestellt. Bei dem erfindungsgemäßen Verfahren wird anhand einer Auswertung von Bildern der Fahrzeugumgebung das Muster der aktuellen Straße bestimmt. Anhand eines Vergleichs mit dem Muster der aktuell umgebenden Straße werden Bilder eines sich am Fahrzeug seitlich erstreckenden Bereichs der Fahrzeugumgebung auf das Vorhandensein von seitlich am Fahrzeug befindlichen Hindernissen, wie zum Beispiel Bordsteine und/oder ähnlichen Objekte, untersucht. So wird erfindungsgemäß ein wenig berechnungsintensives und dadurch schnell durchführbares Verfahren zur Erkennung von Hindernissen, wie zum Beispiel von Bordsteinen und/oder ähnlichen Objekten, eingesetzt. Bei dem erfindungsgemäßen Verfahren entfällt der lang andauernde und rechenintensive Vergleich mit vielen vorbekannten Mustern zur Erkennung von Hindernissen. Auch entfällt bei der erfindungsgemäßen Bestimmung des Musters der aktuell umgebenden Straße die rechenintensive und langandauernde Auswertung von mehreren hintereinander aufgenommenen Bildern der Fahrzeugumgebung, die zumindest ein Stück der zu befahrenen Straße abbilden.

Ein Fahrzeugassistenzsystem zum Durchführen des erfindungsgemäßen Verfahrens braucht keine zusätzlichen Module mit hoher Rechenleistung. Da bei einem üblichen Fahrzeugassistenzsystem mindestens eine Kamera und eine Auswerteeinheit vorhanden sind, sind auch in der Regel keine zusätzlichen Systeme zum Durchführen der erfindungsgemäßen Erkennung von Hindernissen vorzusehen.

In einer weiteren vorteilhaften Ausführungsform der Erfindung wird das Muster der aktuell umgebenden Straße in einfacher Weise mittels einer Erkennung von entsprechenden Strukturwiederholungen in mindestens einem mittels mindestens einer, insbesondere seitlich am Fahrzeug befindlichen, Kamera aufgenommenen Bild der Fahrzeugumgebung bestimmt.

Anstelle des Mustervergleichs (Pattern-Vergleich) der Bilder der Front- und/oder Heckkamera mit den Bildern der seitlichen Kamera, lässt sich die Straße in einfacher Weise auch über eine entsprechende Strukturwiederholung erkennen.

Insbesondere wird bei der erfindungsgemäßen Erkennung des Musters der aktuell umgebenden Straße mindestens ein vordefinierter Bildausschnitt eines mittels der mindestens einen seitlichen Kamera aufgenommenen Bildes der Fahrzeugumgebung ausgewertet, wobei in dem vordefinierten Bildausschnitt der direkte Bereich der Fahrzeugumgebung knapp vor und/oder neben einem Fahrzeugteil, insbesondere angrenzend an einem Fahrzeugteil, insbesondere knapp vor dem Seitenschweller, abgebildet wird.

Das erfindungsgemäße Verfahren zur Erkennung des Bodenmusters mittels der Verwendung des direkten Bildausschnittes knapp vor dem Seitenschweller, wobei der Seitenschweller ebenfalls von der Kamera erkannt wird und die Karosserie durch die am Fahrzeug angebrachten Spiegel gesehen werden kann, ist sehr leicht und schnell durchführbar.

Dadurch kann ein automatisiertes Einparksystem bereits Kenntnis über die Position des Bordsteins besitzen.

Vorzugsweise wird bei der erfindungsgemäßen Bestimmung des mindestens einen Objekts zusätzlich eine Objekterkennung und/oder Objektverfolgung mittels einer Auswertung von Bildern der Fahrzeugumgebung eingesetzt, die mittels mindestens einer am Fahrzeug befindlichen Kamera aufgenommen werden.

Bei dem erfindungsgemäßen Verfahren kann eine Objektverfolgung (Tracking) von über eine nach vorn gerichtete Kamera erkannten Objekten durchgeführt werden. Insbesondere werden zusätzlich oder alternativ auch über eine Heckkamera erkannte Objekte verwendet, die insbesondere im Fall einer erkannten Straße oder eines sich entlang der Straße ausdehnenden Hindernisses nach vorne extrapoliert werden können. Es ist auch eine Extrapolationsunterstützung durch GPS denkbar. Die Extrapolationslänge ist in diesem Fall von der Darstellung der aktuellen Fahrzeugumgebung auf der GPS-Karte abhängig. Bei Vorliegen einer kurz bevorstehenden Einfahrt oder einer scharfen Kurve darf das rückwärtige Bild nur sehr wenig extrapoliert werden; im Fall einer geraden Strasse ist jedoch eine weitere Extrapolation denkbar. Dadurch wird die Detektionswahrscheinlichkeit für einen Bordstein erhöht, da die Struktur der Fahrzeugumgebung genauer untersucht wird.

Insbesondere wird erfindungsgemäß zusätzlich eine Höhe des mindestens einen Objekts mittels einer Auswertung mindestens eines Bildes der Fahrzeugumgebung bestimmt, das insbesondere mittels einer am Fahrzeug befindlichen Stereokamera und/oder Zeilenkamera aufgenommen wird. Hierdurch kann die Detektionswahrscheinlichkeit für einen Bordstein erhöht werden, da ein weiteres Merkmal zur Verfügung steht.

Bei einer besonders bevorzugten Ausführungsform der Erfindung wird mindestens ein als Hindernis erkanntes Objekt, insbesondere mindestens ein als Hindernis erkannter Bordstein, einem Klassifikator als Muster zur Erkennung von ähnlichen Hindernissen zugeführt.

Erfindungsgemäß werden Klassifikatoren angelernt. Während eines automatisierten Einparkversuchs mittels eines Parklenkassistenten (Park-Steering-Control) richtet sich das Fahrzeug automatisiert in einer Längsparklücke an einem Bordstein aus. Das System kennt also bereits die Lage und das Vorhandensein eines Bordsteins. Diese Informationen können von dem bildverarbeitenden Algorithmus direkt genutzt werden und entsprechende Objekte im Bild automatisch dem Klassifikator zugeführt werden, was einer Autolernfunktion des Klassifikators für Bordsteinrepräsentationen im Bild entspricht.

Weiterhin kann der Klassifikator durch Negativ-Erlebnisse lernen. Sollte ein Hindernis überfahren werden, welches nicht als Gefahrobjekt klassifiziert wurde, entstehen entsprechende Ruckbewegungen der Karosserie und Räder. Diese lassen sich mittels verschiedener Sensoren (Reifendrucksensor, Niveausensoren, Sensoren für Längsund Querbeschleunigung und/oder Gierrate) erkennen.

Dadurch können dem Klassifikator insbesondere Informationen von Hindernissen zugeführt werden, die sich in einer aktuell sehr häufig befahrenen Umgebung befinden. Bei der Verwendung eines entsprechend angelernten Klassifikators muss ein detektiertes Hindernis aus einer solchen häufig befahrenen Umgebung nur mit einer geringen Anzahl von im Klassifikator vorhandenen Mustern, die den Hindernissen dieser besonderen Umgebung entsprechen, verglichen werden. Dadurch wird der mit dem Vergleichsalgorithmus verbundene Rechenaufwand und dadurch auch die entsprechende Vergleichszeit erheblich reduziert.

Weiterhin wird erfindungsgemäß ein Fahrzeug mit einem erfindungsgemäßen Fahrzeugassistenzsystem bereitgestellt.

Die Vorteile des erfindungsgemäßen Fahrzeugassistenzsystems und des erfindungsgemäßen Fahrzeuges entsprechen im Wesentlichen den Vorteilen des entsprechenden erfindungsgemäßen Verfahrens. Aus diesem Grund wird auf eine Wiederholung verzichtet.

### Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Draufsicht eines Fahrzeuges mit einem Multikamerasystem nach dem Stand der Technik,
- Figur 2: eine Seitenansicht des Fahrzeuges aus der Figur 1 mit dem entsprechenden Multikamerasystem nach dem Stand der Technik,
- Figur 3: ein Bild eines Rades eines Fahrzeuges während einer Bordsteinkollision,
- Figuren 4a bis 4c: eine Draufsicht des Fahrzeuges aus der Figur 1 mit dem Multikamerasystem nach dem Stand der Technik in drei unterschiedlichen Positionen beim Befahren einer engen Kurve,
- Figur 5: eine Draufsicht eines Fahrzeuges mit einem erfindungsgemäßen Fahrzeugassistenzsystem nach einer ersten Ausführungsform der Erfindung, und
- Figur 6: eine Seitenansicht eines Fahrzeuges mit einem erfindungsgemäßen Fahrzeugassistenzsystem nach einer zweiten Ausführungsform der Erfindung.

### Ausführungsformen der Erfindung

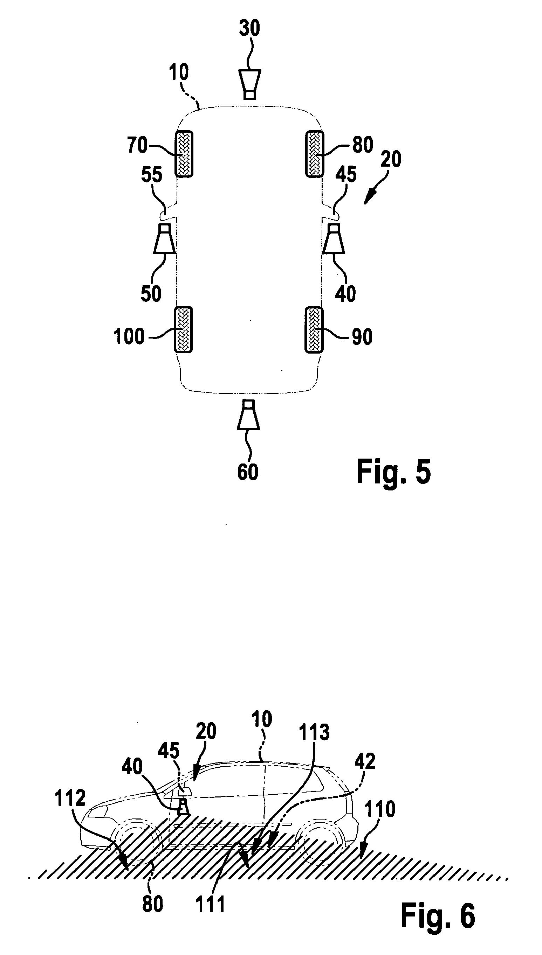

In Figur 5 dargestellt ist eine Draufsicht eines Fahrzeuges 10 mit einem erfindungsgemäßen Fahrzeugassistenzsystem 20 nach einer ersten Ausführungsform der Erfindung.

Mittels von seitlich am Fahrzeug 10, insbesondere am Radkastenrand oder im Spiegelgehäuse 45, 55, montierten Kameras 40, 50 kann der seitliche Bereich des Fahrzeuges 10 hinreichend erfasst werden. An dem Fahrzeug 10 können weitere Kameras, wie zum Beispiel eine Frontkamera 30 und eine Heckkamera 60, vorhanden sein. In der Figur 5 sind auch die Räder 70, 80, 90, 100 des Fahrzeuges 10 dargestellt. Bei dem erfindungsgemäßen Fahrzeugassistenzsystem 20 zur aktiven Warnung und/oder zur Navigationshilfe zur Vermeidung einer Kollision eines Fahrzeugrades 70, 80, 90, 100 mit einem Bordstein und/oder ähnlichen Objekten wird mittels am Fahrzeug 10 befindlicher Kameras 30, 40, 50, 60 geprüft, ob ein Bordstein erkannt wird. Mittels des erfindungsgemäßen Fahrzeugassistenzsystems 20 wird bei Vorliegen einer möglichen Kollision eine Warnung an den Fahrer ausgegeben und/oder aktiv in die Lenkung eingegriffen. Bei dem erfindungsgemäßen Fahrzeugassistenzsystem 20 nach der ersten Ausführungsform der Erfindung erfolgt die Objekterkennung in besonderer Weise über eine Mustererkennung, indem über eine Frontkamera 30 und/oder eine Heckkamera ein Straßenstück aufgenommen wird, das mit dem Bild einer seitlichen Kamera 40, 50 korreliert wird, um einen Bordstein oder ein anderes Hindernis zu erkennen.

In der Figur 6 ist eine Seitenansicht eines Fahrzeuges 10 mit einem erfindungsgemäßen Fahrzeugassistenzsystem 20 nach einer zweiten Ausführungsform der Erfindung dargestellt. Während der Fahrt auf einer Straße 110 wird stets der unmittelbare Bereich 111 seitlich um das Fahrzeug 10 auf das Vorhandensein eines Bordsteins untersucht. Eine Erkennung des Musters der aktuell umgebenden Straße ist über eine Erkennung entsprechender Strukturwiederholungen möglich. Auch kann der direkte Bildausschnitt verwendet werden, der den Bereich 112 der Fahrzeugumgebung in der Nähe eines Fahrzeugteils, insbesondere eines Rades 80 und/oder den Bereich 113 der Fahrzeugumgebung knapp vor dem Seitenschweller 42 abbildet.

Neben der voranstehenden schriftlichen Offenbarung wird hiermit zur weiteren Offenbarung der Erfindung ergänzend auf die Darstellung in den Figuren 5 und 6 Bezug genommen.

## Patentansprüche

1. Verfahren zur aktiven Warnung und/oder zur Navigationshilfe zur Vermeidung einer Kollision eines Fahrzeugkarosserieteils und/oder eines Fahrzeugrades (70, 80, 90, 100) mit einem Objekt, insbesondere einem Bordstein (120), wobei das Objekt anhand einer Auswertung von Kamerabildern der Fahrzeugumgebung erkannt wird und wobei beim Vorliegen einer möglichen Kollision zwischen einem Fahrzeugkarosserieteil und/oder einem Fahrzeugrad (70, 80, 90, 100) und dem erkannten Objekt (120) eine Warnung an den Fahrer ausgegeben wird und/oder aktiv in die Fahrzeugdynamik eingegriffen wird, wobei
ein Muster der aktuell umgebenden Straße (110) durch eine Auswertung eines mittels mindestens einer am Fahrzeug (10) befindlichen Kamera (40, 50) aufgenommenen Bildes bestimmt wird, und
zur Erkennung des Objekts (120) ein mittels mindestens einer seitlich am Fahrzeug (10) befindlichen Kamera (40, 50) aufgenommenes Bild auf Unterschiede zu dem bestimmten Muster der aktuell umgebenden Straße (110) ausgewertet wird, **dadurch gekennzeichnet, dass** mindestens ein Bild eines Straßenstückes mittels einer am Fahrzeug (10) befindlichen Frontkamera (30) und/oder Heckkamera (60) zur Bestimmung eines Musters der aktuell umgebenden Straße (110) aufgenommen wird und mit dem mindestens einen mittels der mindestens einen seitlichen Kamera (40, 50) aufgenommenen Bild der Fahrzeugumgebung zur Erkennung des mindestens einen Objekts (120) korreliert wird.

2. Verfahren nach Anspruch 1, **dadurch gekennzeichnet, dass** das Muster der aktuell umgebenden Straße (110) mittels einer Auswertung mindestens eines mittels mindestens einer insbesondere seitlich am Fahrzeug befindlichen Kamera (40, 50) aufgenommenen Bildes der Fahrzeugumgebung zur Erkennung von entsprechenden Strukturwiederholungen bestimmt wird.

3. Verfahren nach Anspruch 1, **dadurch gekennzeichnet, dass** bei der Erkennung des Musters der direkte Bereich der Fahrzeugumgebung knapp vor (112) und/oder neben einem Fahrzeugteil, insbesondere angrenzend (113) an ein Fahrzeugteil, vorzugsweise an ein Fahrzeugrad (70, 80, 90, 100), insbesondere knapp vor dem Seitenschweller (42), in einem vordefinierten Bildausschnitt eines Bildes der seitlichen Kamera (40, 50) ausgewertet wird.

4. Verfahren nach einem der vorangehenden Ansprüche, **dadurch gekennzeichnet, dass** bei der Bestimmung des mindestens einen Objekts zusätzlich eine Objekterkennung und/oder Objektverfolgung mittels einer Auswertung von Kamerabildern der Fahrzeugumgebung durchgeführt wird und/oder zusätzlich die Höhe des mindestens einen Objekts durch eine Auswertung mindestens eines Bildes der Fahrzeugumgebung bestimmt wird, das insbesondere mittels einer am Fahrzeug befindlichen Stereokamera und/oder Zeilenkamera aufgenommen wird.

5. Verfahren nach einem der vorangehenden Ansprüche, **dadurch gekennzeichnet, dass** mindestens ein als Hindernis erkanntes Objekt (120), insbesondere mindestens ein als Hindernis erkannter Bordstein (120), einem Klassifikator zur Erkennung von ähnlichen Hindernissen als Muster zugeführt wird.

6. Fahrzeugassistenzsystem (20) zur Durchführung des Verfahrens nach mindestens einem der vorangehenden Ansprüche, **gekennzeichnet durch** eine Auswerteeinheit, die dazu ausgebildet ist, mindestens ein Objekt, insbesondere einen Bordstein (120), anhand einer eine Mustererkennung der aktuell umgebenden Straße umfassenden Auswertung mindestens eines mittels mindestens einer, insbesondere seitlich am Fahrzeug (10) befindlichen, Kamera (40, 50) aufgenommenen Bildes der Fahrzeugumgebung zu bestimmen und beim Vorliegen einer möglichen Kollision zwischen einem Fahrzeugkarosserieteil und/oder einem Fahrzeugrad (70, 80, 90, 110) mit dem mindestens einen erkannten Objekt (120) ein Warn- und/oder Steuersignal zu erzeugen, und eine Warneinheit, die dazu ausgebildet ist, beim Vorliegen eines von der Auswerteeinheit erzeugten Warnsignals eine aktive Warnung auszugeben, und/oder eine Steuereinheit, die dazu ausgebildet ist, beim Vorliegen eines von der Auswerteeinheit erzeugten Steuersignals in die Fahrzeugdynamik aktiv einzugreifen.

7. Fahrzeugassistenzsystem (20) nach Anspruch 6, **dadurch gekennzeichnet, dass** die Auswerteeinheit weiter dazu ausgebildet ist, zusätzlich eine Objekterkennung und/oder Objektverfolgung zur Bestimmung des mindestens einen Objekts mittels einer Auswertung von Kamerabildern durchzuführen und/oder zusätzlich die Höhe des mindestens einen erkannten Objekts (120) mittels einer Auswertung mindestens eines Bildes der Fahrzeugumgebung zu bestimmen, das insbesondere mittels mindestens einer am Fahrzeug (10) befindlichen Stereokamera und/oder Zeilenkamera aufgenommen wurde.

8. Fahrzeugassistenzsystem (20) nach einem der Ansprüche 6 oder 7, **dadurch gekennzeichnet, dass** die Auswerteeinheit dazu ausgebildet ist, mindestens ein detektiertes Objekt (120) mittels eines Klassifikators zu klassifizieren und mindestens ein als Hindernis erkanntes Objekt (120), insbesondere mindestens einen als Hindernis erkannten Bordstein (120) dem Klassifikator zur Erkennung von ähnlichen Hindernissen als Muster zuzuführen.

9. Fahrzeug (10) mit einem Fahrzeugassistenzsystem (20) nach mindestens einem der Ansprüchen 6 bis 8.

## Claims

1. Method for actively warning and/or for providing navigation assistance in order to prevent a collision of a vehicle body part and/or of a vehicle wheel (70, 80, 90, 100) with an object, in particular a kerbstone (120), wherein the object is detected on the basis of an evaluation of camera images of the vehicle surroundings, and wherein when there is a possibility of a collision between a vehicle body part and/or a vehicle wheel (70, 80, 90, 100) and the detected object (120) a warning is output to the driver and/or there is active intervention in the vehicle dynamics, wherein
a pattern of the currently surrounding road (110) is determined by evaluating an image which is recorded by means of at least one camera (40, 50) located on the vehicle (10), and
in order to detect the object (120) an image which is recorded by means of at least one camera (40, 50) located laterally on the vehicle (10) is evaluated with respect to differences from the specific pattern of the currently surrounding road (110), **characterized in that** at least one image of a piece of road is recorded by means of a front-mounted camera (30) and/or rear-mounted camera (60) located on the vehicle (10), in order to determine a pattern of the currently surrounding road (110), and is correlated with the at least one image of the vehicle surroundings, recorded by means of the at least one lateral camera (40, 50), in order to detect the at least one object (120).

2. Method according to Claim 1, **characterized in that** the pattern of the currently surrounding road (110) is determined by means of an evaluation of at least one image of the vehicle surroundings recorded by means of at least one camera (40, 50) located, in particular, laterally on the vehicle, in order to detect corresponding structure repetitions.

3. Method according to Claim 1, **characterized in that** during the detection of the pattern the direct region of the vehicle surroundings just in front of (112) and/or next to a vehicle part, in particular adjacent (113) to a vehicle part, preferably to a vehicle wheel (70, 80, 90, 100), in particular just in front of the side sill (42), is evaluated in a predefined image excerpt from an image of the lateral camera (40, 50).

4. Method according to one of the preceding claims, **characterized in that**, during the determination of the at least one object, object detection and/or object tracking are/is additionally carried out by means of an evaluation of camera images of the vehicle surroundings and/or the height of the at least one object is additionally determined by evaluating at least one image of the vehicle surroundings, which image is recorded, in particular, by means of a stereo camera and/or line camera located on the vehicle.

5. Method according to one of the preceding claims, **characterized in that** at least one object (120) which is detected as an obstacle, in particular at least one kerbstone (120) which is detected as an obstacle, is fed to a classifier for detecting similar obstacles as patterns.

6. Vehicle assistance system (20) for carrying out the method according to at least one of the preceding claims, **characterized by** an evaluation unit which is designed to determine at least an object, in particular a kerbstone (120), on the basis of an evaluation, comprising pattern detection of the currently surrounding road, of at least one image of the vehicle surroundings recorded by means of at least one camera (40, 50) located, in particular, laterally on the vehicle (10), and to generate a warning signal and/or control signal when there is the possibility of a collision between a vehicle body part and/or a vehicle wheel (70, 80, 90, 100) and the at least one detected object (120), and a warning unit which is designed to output an active warning when a warning signal which is generated by the evaluation unit is present, and/or a control unit which is designed to engage actively in the vehicle dynamics when a control signal generated by the evaluation unit is present.

7. Vehicle assistance system (20) according to Claim 6, **characterized in that** the evaluation unit is also designed additionally to carry out object detection and/or object tracking in order to determine the at least one object by means of evaluation of camera images and/or additionally to determine the height of the at least one detected object (120) by means of an evaluation of at least one image of the vehicle surroundings, which has been recorded, in particular, by means of at least one stereo camera and/or line camera located on the vehicle (10).

8. Vehicle assistance system (20) according to one of Claims 6 or 7, **characterized in that** the evaluation unit is designed to classify at least one detected object (120) by means of a classifier, and to feed at least one object (120) detected as an obstacle, in particular at least one kerbstone (120) detected as an obstacle, to the classifier for the detection of similar obstacles as patterns.

9. Vehicle (10) having a vehicle assistance system (20) according to at least one of Claims 6 to 8.

## Revendications

1. Procédé d'alerte active et/ou d'aide à la navigation destiné à prévenir une collision d'une partie de carrosserie de véhicule et/ou d'une roue de véhicule (70, 80, 90, 100) avec un objet, notamment une pierre de bordure (120), l'objet étant reconnu à l'aide d'une interprétation d'images de caméra de l'environnement du véhicule et, en présence d'une collision possible entre une partie de carrosserie de véhicule et/ou une roue de véhicule (70, 80, 90, 100) et l'objet (120) reconnu, une alerte étant délivrée à l'attention du conducteur et/ou une intervention active ayant lieu dans la dynamique du véhicule,
un modèle de la route (110) environnante actuelle étant déterminé par une interprétation d'une image enregistrée au moyen d'au moins une caméra (40, 50) qui se trouve sur le véhicule (10), et
en vue de reconnaître l'objet (120), une image enregistrée au moyen d'au moins une caméra (40, 50) qui se trouve latéralement sur le véhicule (10) étant interprétée afin de détecter des différences par rapport au modèle déterminé de la route (110) environnante actuelle,
**caractérisé en ce qu'**au moins une image d'une portion de route est enregistrée au moyen d'une caméra frontale (30) et/ou d'une caméra arrière (60) qui se trouve(nt) sur le véhicule (10) en vue de déterminer un modèle de la route (110) environnante actuelle et mise en corrélation avec l'au moins une image de l'environnement du véhicule, enregistrée au moyen de l'au moins une caméra (40, 50) latérale, en vue de la reconnaissance de l'au moins un objet (120).

2. Procédé selon la revendication 1, **caractérisé en ce que** le modèle de la route (110) environnante actuelle est déterminé par le biais d'une interprétation d'au moins une image de l'environnement du véhicule, enregistrée au moyen d'au moins une caméra (40, 50) qui se trouve notamment latéralement sur le véhicule, en vue de reconnaître des répétitions structurales correspondantes.

3. Procédé selon la revendication 1, **caractérisé en ce que** lors de la reconnaissance du modèle, la zone directe de l'environnement du véhicule tout juste devant (112) une et/ou à côté d'une partie du véhicule, notamment limitrophe (113) d'une partie du véhicule, de préférence d'une roue de véhicule (70, 80, 90, 100), notamment tout juste devant le bas de caisse (42), est interprétée dans une portion d'image prédéfinie d'une image de la caméra latérale (40, 50).

4. Procédé selon l'une des revendications précédentes, **caractérisé en ce que** lors de la détermination de l'au moins un objet, une reconnaissance d'objet et/ou un suivi d'objet est/sont en plus effectué (e) (s) par le biais d'une interprétation d'images de caméra de l'environnement du véhicule et/ou la hauteur de l'au moins un objet est en plus déterminée par le biais d'une interprétation d'au moins une image de l'environnement du véhicule, laquelle est notamment enregistrée au moyen d'une caméra stéréoscopique et/ou d'une caméra linéaire qui se trouve(nt) sur le véhicule.

5. Procédé selon l'une des revendications précédentes, **caractérisé en ce qu'**au moins un objet (120) reconnu comme un obstacle, notamment au moins une pierre de bordure (120) reconnue comme un obstacle, est acheminé à un classificateur en tant que modèle en vue de reconnaître des obstacles similaires.

6. Système d'assistance au conducteur (20) destiné à mettre en oeuvre le procédé selon au moins l'une des revendications précédentes, **caractérisé par** une unité d'interprétation qui est configurée pour déterminer au moins un objet, notamment une pierre de bordure (120), à l'aide d'une interprétation, englobant une reconnaissance de modèle de la route environnante actuelle, d'au moins une image de l'environnement du véhicule, enregistrée au moyen d'au moins une caméra (40, 50), se trouvant notamment latéralement sur le véhicule (10) et, en présence d'une collision possible entre une partie de carrosserie de véhicule et/ou une roue de véhicule (70, 80, 90, 100) et l'au moins un objet (120) reconnu, pour générer un signal d'alerte et/ou de commande, et une unité d'alerte qui est configurée pour, en présence d'un signal d'alerte généré par l'unité d'interprétation, délivrer une alerte active, et/ou une unité de commande qui est configurée pour, en présence d'un signal de commande généré par l'unité d'interprétation, intervenir activement dans la dynamique du véhicule.

7. Système d'assistance au conducteur (20) selon la revendication 6, **caractérisé en ce que** l'unité d'interprétation est en outre configurée pour effectuer en plus une reconnaissance d'objet et/ou un suivi d'objet en vue de déterminer l'au moins un objet par le biais d'une interprétation d'images de caméra et/ou pour déterminer en plus la hauteur de l'au moins un objet (120) reconnu par le biais d'une interprétation d'au moins une image de l'environnement du véhicule, laquelle a notamment été enregistrée au moyen d'au moins une caméra stéréoscopique et/ou caméra linéaire qui se trouve(nt) sur le véhicule (10).

8. Système d'assistance au conducteur (20) selon la revendication 6 ou 7, **caractérisé en ce que** l'unité d'interprétation est configurée pour classifier au moins un objet (120) détecté au moyen d'un classificateur et pour acheminer au classificateur en tant que modèle au moins un objet (120) reconnu comme un obstacle, notamment au moins une pierre de bordure (120) reconnue comme un obstacle, en vue de reconnaître des obstacles similaires.

9. Véhicule (10) équipé d'un système d'assistance au conducteur (20) selon au moins l'une des revendications 6 à 8.
